(19) Europäisches Patentamt
European Patent Office
Office européen des brevets

(11) EP 0 928 307 B2

(12) # NOUVEAU FASCICULE DE BREVET EUROPEEN

(45) Date de publication et mention de la décision concernant l'opposition:
**23.06.2004 Bulletin 2004/26**

(45) Mention de la délivrance du brevet:
**09.05.2001 Bulletin 2001/19**

(21) Numéro de dépôt: **97943006.3**

(22) Date de dépôt: **26.09.1997**

(51) Int Cl.[7]: **C08J 3/03**
// C08L83:04

(86) Numéro de dépôt international:
**PCT/FR1997/001698**

(87) Numéro de publication internationale:
**WO 1998/013410 (02.04.1998 Gazette 1998/13)**

(54) **DISPERSION SILICONE AQUEUSE**
WÄSSRIGE SILIKONDISPERSION
AQUEOUS SILICON DISPERSION

(84) Etats contractants désignés:
**AT BE CH DE DK ES FI FR GB GR IE IT LI LU NL PT SE**

(30) Priorité: **26.09.1996 FR 9611971**

(43) Date de publication de la demande:
**14.07.1999 Bulletin 1999/28**

(73) Titulaire: **RHODIA CHIMIE**
**92408 Courbevoie Cédex (FR)**

(72) Inventeurs:
- **FEDER, Michel**
  **F-69100 Villeurbanne (FR)**
- **JOST, Philippe**
  **F-69440 Taluyers (FR)**
- **LETOFFE, Michel**
  **F-69110 Sainte-Foy-lès-Lyon (FR)**
- **DUCHAMP, Marie-Cécile**
  **F-69300 Caluire (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 202 494**
**EP-A- 0 572 006**
**WO-A-96/08529**
**DE-A- 4 340 400**
**FR-A- 2 697 021**

EP 0 928 307 B2

## Description

Le domaine de la présente invention est celui des compositions silicones durcissables par réticulation et utilisables notamment comme mastic ou tout autre matériau d'étanchéification, ou pour former tout type de revêtement par exemple dans des peintures, sont notamment les Revêtements Semi-Epais (RSE) souples.

Plus précisément, l'invention concerne une dispersion silicone aqueuse, formant un élastomère adhérent par élimination d'eau, selon des mécanismes de polycondensation intervenant, avantageusement, à température ambiante.

Les silicones ou polyorganosiloxanes (POS), tels que le $\alpha,\omega$-(dihydroxy)-polydiorganosiloxane, sont connus pour entrer dans la composition de mastics silicones standards comprenant, en outre, des réticulants du type alkyltrialcoxysilane, des catalyseurs de polycondensation du type sel d'étain et des charges. De telles compositions se sont avérées peu commodes à l'utilisation pour réaliser, par exemple, des joints d'étanchéification, des films ou des revêtements, car leurs états pâteux et visqueux rendent difficiles leur manipulation et leur mise sous une forme donnée.

De plus, ces compositions présentent l'inconvénient de n'être pas dispersibles ou solubles dans l'eau, ce qui complique leur utilisation, en particulier parce que les outils utilisés pour leur application ne sont, de fait, pas aisément lavables à l'eau.

Par ailleurs, ces compositions ont également le désavantage de ne pas être "peignables" : les peintures n'accrochent pas dessus.

S'agissant des RSE, on en connaît également certains préparés à partir d'émulsions de polymères organiques. Ces RSE sont imperméables à l'eau mais péchent en ce qui concerne la perméabilité à la vapeur d'eau.

Pour pallier ces graves défauts, on a développé des systèmes de formation de mastic ou de film réticulable (RSE), à partir d'émulsion aqueuse à base d'huile silicone réticulable en un élastomère par condensation (avec élimination d'eau et d'alcool par exemple).

Bien que d'application plus pratique, ces émulsions aqueuses de silicone ont soulevé un certain nombre de difficultés techniques :

- stabilité au stockage de l'émulsion,
- temps de durcissement trop long,
- propriétés mécaniques médiocres de l'élastomère (dureté, élasticité, résistance à l'abrasion),
- défaut de thixotropie de l'élastomère,
- défaut de caractère « peignable » de l'élastomère,
- faibles propriétés d'adhérence et de cohésion de l'élastomère sur les supports usuels,
- problèmes de sécurité et de toxicité dus aux solvants ou aux alcools formés par hydrolyse,
- et facilité d'utilisation.

S'agissant de ces deux dernières spécifications évoquées dans le cahier des charges supra, il convient de noter que la question du respect de certaines normes de sécurité et de non toxicité pour les dispersions silicones aqueuses, de même que pour les élastomères réticulés par condensation qui en sont issus, se posent avec une certaine acuité, car bon nombre de produits du marché sont porteurs ou dégagent lors de la réticulation ou du séchage, des composés organiques volatils (COV) plus ou moins toxiques ou agressifs, tels que par exemple les alcools (éthanol, méthanol méthoxyéthanol), les éthers, les oximes, les acides (acide acétique). On conçoit aisément que de tels composés soient indésirables aussi bien sur le plan de la conservation que sur celui de l'utilisation.

Outre cet aspect toxicité/sécurité, il serait particulièrement appréciable pour les utilisateurs finaux, de disposer de dispersions silicones aqueuses et d'élastomères, qui ne génèrent que de l'eau, de manière à pouvoir être utilisés sans précaution particulière et de manière à pouvoir également être aisément lavables à l'eau tout en conservant de bonnes propriétés d'adhérence sur des supports tels que par exemple le verre, le bois, le béton, les métaux.

Diverses propositions de l'art antérieur ont tenté de satisfaire, en vain au cahier des charges défini ci-dessus.

La demande de brevet allemand **N° 3 019 655** décrit une émulsion silicone qui, après élimination d'eau, peut être convertie en un élastomère dans des conditions ambiantes. Cette émulsion silicone comprend également de la silice amorphe introduite sous forme de dispersion colloïdale. De telles dispersions de silice ne sont pas particulièrement stables. Le pH du mélange est un paramètre critique au regard de la stabilité. Il est donc très délicat à fixer. Par ailleurs, l'incorporation de silice est à l'origine d'une certaine inhomogénéité de dureté de l'élastomère réticulé obtenable. Ceci est dû au fait que la silice a, en effet, tendance à réagir de façon parasite avec les extrémités OH réactives de l'huile silicone.

Dans d'autres propositions antérieures, la charge siliceuse est du silicate de soude **(US N° 4 244 849)** ou de la silice amorphe en poudre **(FR N° 2 463163).**

Ces trois derniers brevets enseignent que pour obtenir une émulsion monocomposante stable au stockage, il faut fixer son pH à des valeurs supérieures ou égales à 8,5 ou 9, de préférence à 10. Cependant, les émulsions

selon ces brevets ne répondent pas aux attentes du domaine technique, en matière de stabilité, de propriétés mécaniques et d'adhérence. Enfin, aucune des inventions décrites dans ces brevets ne résoud simultanément le problème des COV et le problème de l'adhérence de la cohésion et de la stabilité.

La demande de brevet européen **N° 0 359 676** concerne des dispersions aqueuses réticulables, utilisables notamment comme mastic, et comprenant une résine silicone hydroxylée à titre de réticulant d'une huile α, ω-(dihydroxy) polydiorganosiloxane, ladite réticulation s'effectuant en présence d'un catalyseur de condensation stanneux. Il s'avère que ces compositions émulsifiées sont peu adhérentes, en particulier sur le verre. A pH neutre ou acide, leur adhérence est même nulle.

Le brevet américain **N° 4 554 187** propose une émulsion en silicone convertible en un élastomère dans des conditions ambiantes, par élimination d'eau et d'alcool et comprenant un polydiorganosiloxane à extrémités hydroxyles, une résine silicone alcoxy ou acyloxy fonctionnelle réactive et utile comme agent de réticulation, un catalyseur du type sels organostanneux, des charges thixotropiques de nature siliceuse ou non et des charges non thixotropiques telles que $Ca(OH)_2$. L'extrait sec de cette émulsion est compris entre 20 et 85 %. La résine silicone réticulante acyloxy- ou alcoxyfonctionnelle peut être une résine méthyl ou méthoxysilicone non aminée, de formule $CH_3\ Si\ (O)_{1,1}\ (OCH_3)_{0,8}$. Cette résine non hydrosoluble est introduite sous forme d'émulsion. Les compositions selon ce brevet US contiennent nécessairement un tensioactif anionique, imposé par la méthodologie de préparation de l'huile silicone dihydroxylée, par polymérisation en émulsion. Un tel tensioactif anionique nuit à la stabilité de l'émulsion. Il est à noter également que la présence de la résine silicone acyloxy ou alcoxy fonctionnalisée réticulante est un facteur d'inhibition de la polymérisation en émulsion, dès lors qu'elle est ajoutée avant l'étape de polymérisation. En conséquence, cette proposition technique n'est pas satisfaisante et ce d'autant moins que les performances en matière de résilience, élasticité et adhérence sont faibles. Enfin, les mécanismes de condensation susceptibles d'intervenir dans cette émulsion ou cet élastomère sont générateurs de COV indésirables (alcools ou acides).

La demande de brevet européen **N° 0 572 006** divulgue des dispersions aqueuses de POS stables au stockage prêts à l'emploi et comprenant : un POS (A) pourvu de groupements condensables (OR-OH) tels que l'α,ω-(diOH-polydiméthylsiloxane) (PDMS) ; un catalyseur de condensation du type sels d'étain ; une résine POS (C) à motifs siloxyles DT, MT ou MQ et de poids moléculaire PM ≤ 20 000 (les substituants alkyles des motifs MDT étant des méthyles) ; un promoteur d'adhérence (D) comportant un ou plusieurs restes azotés basiques, et de l'alcool polyvinylique (E).

La formule du promoteur d'adhérence azoté (D) est très générale et couvre une multitude de composés. Cette demande de brevet enseigne l'utilisation de manière privilégiée de promoteur (D) du type N-(2-aminoéthyl)-3-aminopropylméthylsilanolate de potassium ou bien encore de PDMS fonctionnalisé par des motifs 3-(2-aminoéthylamino) propyle. Ces promoteurs d'adhérence (D) recommandés ne sont pas hydroxylés. De plus, la présence incontournable d'alcool polyvinylique dans ces dispersions aqueuses selon l'**EP-A-0-572 006** est un facteur nuisible au phénomène de coalescence, essentiel à la réticulation. Cela n'est pas sans avoir des répercussions négatives quant aux caractéristiques mécaniques de l'élastomère réticulé final.

Enfin, les dispersions aqueuses et les élastomères selon cette demande européenne antérieure ne satisfont pas correctement au cahier des charges notamment, en ce qui concerne l'adhérence sur support et la teneur réduite en COV. Il est à noter que ces dispersions selon **l'EP-A-0 572 006** ne sont pas chargées ou comprennent des charges ne générant pas d'opacité, dans le but de fournir des mastics capables de conduire à des élastomères transparents en couche mince.

La demande de brevet européen **N° 0 655 475** est dans la même veine que **l'EP-A-0 572 006** visé supra et concerne une dispersion aqueuse réalisée à base d'une émulsion d'huile silicone condensable du type PDMS α,ω-diOH (A), d'une résine POS (B) de PM inférieur à 20 000 et d'un composé aminé ( C ), cette dispersion étant caractérisée en ce qu'elle ne contient aucun catalyseur organométallique.

Les composés (A), (B) et (C) **l'EP-A-0 655 475** correspondent respectivement aux composés (A) (C), (D) de **l'EP-0 572 006.**

Là encore les formules du réticulant (B) et du promoteur d'adhérence (C) sont de portée extrêmement générale et définissent de très larges familles de produits. En pratique, s'agissant du réticulant (B), cette demande de brevet préconise, notamment au travers de ces exemples, l'emploi de résines à motifs siloxyles MD ou MDT alcoxylés voire acétoxylés ou oximés. Il s'ensuit que des COV indésirables seront nécessairement présents non seulement dans la dispersion silicone aqueuse, mais surtout dans l'élastomère réticulé.

S'agissant des promoteurs d'adhérence (C), l'enseignement de cette demande de brevet incite à mettre en oeuvre des silanolates de potassium du type N-(2-aminoéthyl)-3-aminopropylsilanolate de potassium ou bien encore des PDMS N-(2 aminoéthyl)-3-aminopropylméthyl substitués. Ces promoteurs (C) ne sont pas hydroxylés.

Enfin, il y a lieu de noter que l'absence de catalyseur organométallique dans ces compositions selon l'**EP-A-0 655 475** est préjudiciable à une bonne réticulation et donc, in fine, aux caractéristiques mécaniques et d'adhérence de l'élastomère.

La demande de brevet européen **N° 0 202 494** divulgue un procédé pour produire une émulsion silicone

aqueuse consistant à préparer une émulsion de base à partir de :

- (A) - 100 parties en poids d'un polydiméthylsiloxane $\alpha,\omega$-dihydroxylé,
- (B) - 1 à 150 parties en poids d'une silice colloïdale ou 0,3 à 30 parties en poids d'un silicate métallique alcalin.
- (C) - une quantité catalytique de catalyseurs de réticulation tels que le dilaurate de dibutylétain.
- (D) - 2 à 30 parties en poids d'un émulsifiant du type laurylsulfate de sodium et
- (E) - de l'eau.

Le procédé consiste ensuite à ajuster le pH entre 9 et 12 et à faire en sorte que cette émulsion de base soit soumise à une maturation pendant 2 semaines à température ambiante de manière à produire un matériau élastomère. On ajoute ensuite :

- (F) - 0,5 à 30 parties en poids d'un agent couplage formé par un silane époxyfonctionnel ou par les produits d'hydrolyse ou de condensation de celui-ci ;
- (G) - 50 à 300 parties en poids d'une charge (carbonate - $TiO_2$) et
- (H) - 0,1 à 2 % en poids par rapport à la charge, d'un dispersant (celle de polyphosphate), alcool polyvinylique PVP...).

L'émulsion ainsi obtenue peut être utilisée pour réaliser des revêtements ou des joints sur des substrats poreux.
Il convient de noter que cette émulsion silicone présente l'inconvénient majeur d'être très longue à préparer, compte tenu de la période de maturation nécessaire.
En outre, le silane F époxyfonctionnel ainsi que ses produits de condensation mais à l'exclusion de ses produits d'hydrolyse, comportent des substituants organofonctionnels hydrolysables susceptibles de générer des COV toxiques. De plus, cette émulsion est également critiquable en ce qu'elle peut comprendre de l'alcool polyvinylique. Il s'ensuit que cette émulsion ne donne pas satisfaction au niveau des propriétés mécaniques (dureté - souplesse), de cohésion et d'adhérence pour les élastomères réticulés qui en sont issus.
La demande de brevet français **N° 94 11 410** concerne une dispersion silicone aqueuse, réticulable en un élastomère adhérent, selon un mécanisme réactionnel de condensation. Cette dispersion comprend un POS (A) du type PDMS $\alpha$ ,$\omega$-diOH, un tensioactif (B), un composé aminé silicié (C) formé de plusieurs unités récurrentes alcoxylées de formule $R^1_x\, R^2_y\, (O^3)_z\, SiO_{4-(x+y+z)}\, /\, _2$ avec z compris entre 0,2 et 2, $R^1$, $R^3$ = méthyle et $R^2$ = reste azoté. Cette dispersion comprend éventuellement également au moins une résine silicone hydroxylée et/ou alcoxylée (D), et/ou au moins un alcoxysilane (E), et/ou au moins un catalyseur de condensation (F), et/ou au moins une charge (G) siliceuse ou non.
Le composé aminé et silicié (C) est une résine de fonctionnalité moyenne en silicium supérieur à 2 et susceptible d'être salifiée à un pH acide. Une telle résine n'est donc hydrodispersable ou hydrosoluble qu'à un pH acide. Une telle limitation au niveau de l'hydrosolubilité est contraignante. En outre, la stabilité de cette émulsion, bien que satisfaisante, reste néanmoins perfectible. Enfin, cette résine (C) n'est pas hydroxylée.
Dans cet état de faits, l'un des objectifs essentiel de la présente invention est de proposer une dispersion (émulsion) silicone aqueuse :

- apte à réticuler par élimination d'eau, de préférence dans des conditions atmosphériques ambiantes, en un élastomère aux propriétés mécaniques convenables (cohésion) et doué d'un fort pouvoir d'adhésion sur des supports de différentes natures (e.g. en verre, en béton, en métal, en bois),
- et remédiant aux lacunes, et aux inconvénients des émulsions connues de ce type, notamment en ce qui concerne la sécurité/toxicité (teneur en COV) et la facilité d'utilisation.

Plus particulièrement la présente invention vise à optimiser l'adhérence et la cohésion des élastomères issus de la réticulation de dispersions silicones aqueuses, sur tout support usuel : verre, béton, bois, métaux (aluminium), céramiques, sans sacrifier aux autres spécifications du cahier des charges technique, dont notamment la stabilité en cartouche pour les mastics (ou durée limite d'utilisation), l'élasticité, la résilience, la dureté, la résistance mécanique et la modicité du coût de revient, et en apportant de surcroît une amélioration qui vise à réduire au maximum la teneur en COV dans la dispersion et l'élastomère, de sorte que le seul solvant ou volatil intervenant soit l'eau.
Un autre objectif de la présente invention est de proposer une dispersion silicone aqueuse et l'élastomère réticulé correspondant, qui soient faciles d'utilisation et notamment lavables à l'eau (nettoyage des outils ayant servis à leur préparation et à leur utilisation), en raison de la présence exclusive d'eau à titre de solvant ou de phase continue.
Un autre objectif de la présente invention est de proposer une dispersion aqueuse de silicone qui soit stable au stockage (cartouche - « pot-life ») et qui conserve une réactivité lui permettant de réticuler correctement et suffisamment rapidement en un élastomère conservant ses propriétés mécaniques, même après un stockage de plus de six mois.

Un autre objectif de l'invention est de proposer une dispersion aqueuse de silicone de type décrit ci-dessus, conduisant à un élastomère présentant une résistance à la flamme améliorée.

Un autre objectif de l'invention est de fournir une dispersion aqueuse silicone facilement manipulable et conformable, notamment en vue des applications de type mastic, matériau d'étanchéification, joint, réalisation de film ou de revêtement divers (RSE).

Un autre objectif de l'invention est de fournir un mastic, un matériau d'étanchéification, un film ou un revêtement divers (adhérent) tel qu'un RSE, comportant la susdite dispersion et/ou l'élastomère réticulé qui en est issu.

En particulier, il serait intéressant de disposer d'une dispersion permettant la confection facile de joints et qui offre la possibilité de rendre lisse ces joints, de façon à leur conférer un bel aspect de surface.

En outre, l'invention vise à satisfaire à un besoin du domaine considéré, en une dispersion réticulable utilisable pour la réalisation de RSE élastomères souples, élastiques, imperméables à l'eau, perméables à la vapeur d'eau et enfin résistants à l'abrasion.

Ces objectifs et d'autres sont atteints par la présente invention, qui procède de la mise en évidence, après de longues études et expérimentations et de manière tout à fait surprenante et inattendue, de la possibilité de supprimer dans les dispersions silicones aqueuses les constituants condensables non hydroxylés de même que les COV, ainsi que de la possibilité d'obtenir un élastomère réticulé mécaniquement correct et fortement adhérent sur de nombreux supports, et ce en sélectionnant un promoteur d'adhérence hydrosoluble, hydroxylé et porteur de fonctions hydrophiles d'ancrage sur support.

Ces dispositions constituent quelques uns des fondements conceptuels de l'invention. Il s'ensuit que la présente invention telle que définie dans les revendications, concerne une dispersion silicone aqueuse, réticulable par condensation en un élastomère adhérent,
caractérisée :

- en ce qu'elle comprend des constituants condensables, hydroxylés et exempts de Substituants organo fonctionnels hydrolysables (Sofh), susceptibles de générer in situ des COV, lors de l'hydrolyse et/ou lors de la réticulation par condensation ;
- en ce qu'elle est exempte de composés organiques volatils (COV)
- en ce qu'elle est exempte d'alcool polyvinylique ;
- et en ce qu'elle est constituée par :

  - **A -** au moins un polyorganosiloxane (POS) présentant, par molécule, au moins deux groupements OH ;
  - **B -** au moins un promoteur d'adhérence et de cohésion hydrosoluble capable de se dissoudre dans l'eau à une température de 25° C à hauteur d'au moins 5% en poids et choisi parmi les silanes et/ou les POS hydroxylés et porteurs, par molécule, d'au moins un groupement hydroxyle et d'au moins une Fonction hydrophile d'ancrage sur support (Fas), ainsi que parmi les mélanges de ces produits, **à l'exclusion** des produits d'hydrolyse de silanes époxyfonctionnels alcoxylés, lesdites fonctions Fas identiques ou différentes entre elles étant choisies dans le groupe comprenant les fonctions : amino, époxy, acrylo, méthacrylo, uréido, mercapto, thiol, chloroalkyle ;
  - **C** - au moins un catalyseur organométallique de condensation, de préférence choisi parmi les sels d'étain,
  - **D** - éventuellement au moins un tensioactif,
  - **E** - et éventuellement au moins un réticulant avec les conditions selon lesquelles :

    * 1 * en présence d'un tel réticulant (E), le promoteur (B) peut ne comporter qu'au moins un groupement OH par molécule.
    * 2 * tandis qu'en l'absence d'un tel réticulant (E), le promoteur (B) et/ou le POS (A) comporte au moins trois OH.

Comme cela ressort de la définition ci-dessus de l'invention, il importe que la fonction de réticulation soit assurée par au moins un constituant (A), (B) ou (E) de la dispersion. Cette fonction de réticulation suppose qu'au moins trois OH soient présents par molécule. Quand l'un des constituants (A), (B), (E) possède au moins trois OH, il n'est pas nécessaire qu'(A) et/ou (E) satisfasse à la même condition. De plus, si A et/ou B comprennent chacun en moins trois OH, la présence de (E) est facultative.

Par ces moyens la Demanderesse a eu le mérite d'obtenir des dispersions silicones aqueuses, réticulables par condensation en un élastomère très adhérent sur de nombreux supports et, de surcroît, exempt de COV, donc non toxique et sûr. Subsidiairement, les dispersions silicones aqueuses primaires selon l'invention sont stables au stockage et les élastomères réticulés correspondant s'avèrent peignables, ce qui n'est pas un avantage négligeable.

Au sens de l'invention, les substituants organofonctionnels hydrolysables **(Sofh),** susceptibles de générer in situ des COV, lors de la réticulation par condensation sont, par exemple, des alcoxy, des acétoxy, des cétiminoxy, des énoxy.

La dispersion selon l'invention, exempte d'APV, comprend obligatoirement comme indiqué supra, outre les constituants (A) et (B), au moins un catalyseur (C).

Avantageusement, la dispersion selon l'invention, exempte d'APV, comprend obligatoirement, outre les constituants (A), (B) et (C) au moins un tensioactif (D) et au moins un réticulant (E).

Outre ses caractéristiques générales de présence de constituants, condensables hydroxylés (et exempts de **Sofh**), d'absence de COV et d'APV, ainsi que de non production de COV lors de la réticulation, la dispersion selon l'invention trouve également son originalité dans sa composition.

Le premier constituant cité est le polyorganosiloxane POS (A), qui est le constituant essentiel sur le plan pondéral. Il s'agit avantageusement d'une huile silicone formée, par un polydiorganosiloxane, de préférence, à extrémités hydroxyles. Les groupements organiques au sein de la chaîne de cette huile (A) sont avantageusement sélectionnés parmi les composés suivants : hydroxyle, (cyclo)alkyle en $C_1$-$C_6$ ou alcényle $C_1$-$C_6$, (par exemple vinyle ou allyle), amine. Cette huile préférée peut être représentée par la formule suivante :

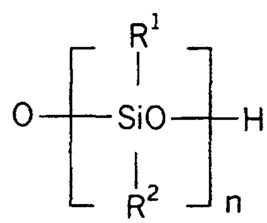

avec n ≥ 10, $R^1$, $R^2$ identiques ou différents et correspondant à un hydroxyle, un (cyclo)alkyle en $C_1$-$C_6$ ou un (cyclo) alcényle en $C_1$-$C_6$ - e.g. : vinyle ou alkyle - ou bien encore à une amine; le méthyle étant particulièrement préféré.

Ces radicaux organiques $R^1$, $R^2$ peuvent être éventuellement substitués par des groupes cyano ou fluoro. Les substituants généralement utilisés du fait de leur disponibilité dans les produits industriels, sont les radicaux méthyle, éthyle, propyle, phényle, vinyle et 3,3,3-trifluoropropyle. En général, au moins 80 % en nombre de ces radicaux sont des radicaux méthyle.

En pratique, on privilégiera les α,ω-dihydroxypolydiméthylsiloxanes à extrémités :

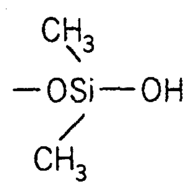
,

à titre de POS (A).

Dans le cadre de la présente invention, on peut spécialement utiliser les α ,ω-(dihydroxy)polydiorganosiloxanes préparés par le procédé de polymérisation anionique décrit dans les brevets américains précités : **US-A-2 891 920** et surtout **US-A-3 294 725.** Le polymère obtenu est stabilisé anioniquement par un agent tensioactif qui, conformément à l'enseignement de **US-A-3 294 725** est, de préférence, le sel d'un métal alcalin d'un acide hydrocarboné aromatique sulfonique, l'acide libre jouant également le rôle de catalyseur de polymérisation. Le catalyseur et l'agent tensioactif préférés sont l'acide dodécylbenzènesulfonique ou l'acide alkylsulfurique et leurs sels de métaux alcalins, en particulier leurs sels de sodium. On peut ajouter éventuellement d'autres agents tensioactifs anioniques ou non anioniques. Toutefois, cet ajout n'est pas nécessaire car, conformément à l'enseignement de **US-A-3 294 725**, la quantité d'agent tensioactif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement une émulsion contenant l'huile (**A**). Par ailleurs, ce procédé permet de pouvoir obtenir sans difficulté du α,ω-(dihydroxy)-polydiorganosiloxane (**A**) en émulsion de très haute viscosité.

Conformément à l'invention, on préferera toutefois partir d'α,ω--(dihydroxy)polydiorganosiloxane (A) déjà polymérisé pour la préparation de la dispersion.

Ce POS (A) peut se présenter sous la forme d'huile monophasique ou sous la forme de préemulsion. La

préparation de cette préémulsion sera évoquée ci-après.

Il est, par ailleurs, préférable que la viscosité η à 25°C de ces POS (A) soit d'au moins 100 mPa.s, de préférence d'au moins 50 000 mPa.s. C'est en effet notamment pour des viscosités η supérieures à 50 000 mPa.s que l'on obtient un élastomère présentant un ensemble de propriétés mécaniques convenables, en particulier au niveau de la dureté shore A et de l'allongement. En outre, plus la viscosité est élévée et plus les propriétés mécaniques se conservent lors du vieillissement de l'élastomère réticulé susceptible d'être obtenu à partir de la dispersion aqueuse. Les viscosités η à 25°C choisies, en pratique, dans le cadre de l'invention sont comprises entre $5 \times 10^4$ et $15 \times 10^5$ mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisament faible pour que la viscosité mesurée soit indépendante du gradient de vitesse.

S'agissant du promoteur d'adhérence (B) sélectionné conformément à l'invention, il convient de noter que l'une de ses caractéristiques essentielles est de comporter un ou plusieurs groupements hydroxyles, permettant sa fixation dans la matrice silicone.

Une autre spécificité des promoteurs (B) est d'être doté de fonction(s) **Fas** assumant l'adhérence du mastic (élastomère) issu de la dispersion sur les supports. Enfin, le caractère hydrophile des groupements OH et/ou des fonctions **Fas** de (B), est un facteur important de l'invention. Cela procure à (B) une hydrosolubilité avantageuse. En effet, grâce à cette hydrosolubilité, le promoteur peut être particulièrement bien dispersé et solubilisé dans la phase continue aqueuse de la dispersion ou du mastic (élastomère), de manière à favoriser la stabilité et l'adhérence dudit mastic sur les supports. Cette forme solubilisée du promoteur (B), est une forme physicochimique optimale pour l'effet recherché. (B) peut, en effet, diffuser aisément vers l'interface support/dispersion, pour pouvoir y exercer son action adhérente, en s'opposant aux tensioactifs présents dans les dispersions et doués d'effets antagonistes à cet égard. Il y a compétition entre le promoteur et les tensioactifs.

Le promoteur (B) de la dispersion selon l'invention peut être avantageusement choisi parmi les silanes hydroxylés et/ou les POS **Fas**-substitués. Comme exemples de silanes hydroxylés et **Fas**-substitués, on peut citer les mono**Fas**trihydroxy-monosilanes, tels que le : $NH_2\ (CH_2)_3\text{-}Si(OH)_3$.

Ceci étant précisé, le promoteur d'adhérence hydrosoluble (B) est, de préférence, un polydiorganosiloxane hydroxylé linéaire à motifs siloxyles D et/ou MD et/ou une résine POS hydroxylée comprenant des motifs siloxyles T et éventuellement M et/ou D et/ou Q ou bien encore des motifs siloxyles Q et M et/ou D et/ou T.

Ce POS est exempt de COV et n'est pas substitué par des **Sofh**, e.g. par des fonctions alcoxyles. Il est porteur d'au moins une **Fas** liée à au moins un Si.

Les motifs siloxyles M, D, T, Q du POS (B) sont définis comme suit :

- motif M = $R_3\ SiO_{1/2}$
- motif D = $R_2\ SiO_{2/2}$
- motif T = $RSiO_{3/2}$
- motif Q = $SiO_{4/2}$

Les radicaux R sont identiques ou différents et correspondent à un radical hydrocarboné, comme par exemple un radical alkyle (e.g. méthyle, éthyle, isopropyle, tertiobutyle et n-hexyle), hydroxyle, alcényle (e.g. vinyle, allyle) ou bien encore une fonction **Fas**.

A titre d'exemple de POS hydroxylé linéaire, utilisable comme promoteur (B), on peut citer le PolyMéthylSiloxane, dont les deux extrémités comportent un hydroxyle et dont chaque atome de silicium est porteur d'une fonction **Fas**.

Le cas où le promoteur (B) est une résine POS hydroxylée hydrosoluble est l'un des préférés selon l'invention. Les résines plus particulièrement sélectionnées sont celles du type T(OH), DT(OH), DQ(OH), DT(OH), MQ(OH), MDT (OH) MDQ(OH) ou les mélanges de celles-ci. Dans ces résines, chaque groupement OH est porté par un atome de silicium appartenant à un motif D, T ou Q.

Ces résines sont des produits de condensation (mono ou polycondensation-hétéro ou homo condensation) de monomères, d'oligomères ou de polymères POS porteurs de groupements condensables, de préférence de nature hydroxylique.

Outre ces hydroxyles, le promoteur (B) comporte, comme indiqué supra, une ou plusieurs fonctions Fas identiques ou différentes entre elles et choisies dans le groupe comprenant les fonctions : amino, époxy, acrylo, méthacrylo, uréido, mercapto, thiol, chloroalkyle.

De préférence, **Fas** est un groupement aminoalkyle, non salifié, de formule générale :

$$-R^3\text{-}NR^4R^5 \text{ ou } -R^3\text{-}NH\text{-}R^6\text{-}NR^4R^5$$

dans laquelle:

$R^3$ et $R^6$ = reste hydrocarboné (par exemple $-(CH_2)_n-$ avec n = 1 à 10)
$R^4$ = H ou $-C_nH_{(n+1)}$
$R^5$ a la même définition que $R_4$ et peut être identique ou différent de $R^4$

L'amine peut ainsi être primaire, secondaire ou tertiaire. Selon des variantes, elle peut être incluse dans un cycle ou être incluse dans des groupements isocyanurates ou HALS (type pipéridine ou autre).

Au sens de l'invention, les groupements HALS peuvent être définis comme une chaîne hydrocarbonée cyclique (HALS) de formule :

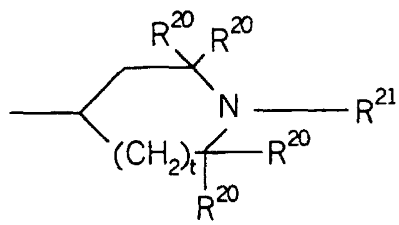

dans laquelle :

- ☐ les radicaux $R^{20}$, identiques ou différents entre eux, sont choisis parmi les radicaux alkyles, linéaires ou ramifiés, ayant de 1 à 3 atomes de carbone, phényle et benzyle,
- ☐ $R^{21}$ est choisi parmi un atome d'hydrogène, les radicaux alkyles linéaires ou ramifiés, ayant de 1 à 12 atomes de carbone, les radicaux allkylcarbonyles où le reste alkyle est un reste linéaire ou ramifié ayant de 1 à 18 atomes de carbone, les radicaux phényle et benzyle et un radical O ;
- ☐ t est un nombre choisi parmi 0 et 1 ;
- ☐ les radicaux $R^{20}$ préférés étant des méthyles, le radical $R^{21}$ étant un nombre d'hydrogène ou un radical méthyle et t étant avantageusement un nombre égal à 1.

Ces fonctions **Fas** sont avantageusement choisies de telle sorte qu'elles soient aptes à se lier avec le support sur lequel le mastic est appliqué, de manière à procurer de l'adhérence, et ce sans mettre à mal l'hydrosolubilité souhaitable pour le promoteur (B). Ce sont les fonctions hydroxyles qui assurent pour partie, le pontage du promoteur (B) et donc du support avec l'élastomère silicone réticulé.

Selon une variante envisageable, certaines des fonctions **Fas** peuvent correspondre à des fonctions hydroxyles et il n'est pas à exclure que certaines fonctions **Fas** puissent assurer la fonction de liaison entre le promoteur (B) et la matrice silicone (A).

Selon un premier mode avantageux de mise en oeuvre de l'invention, le promoteur (B) est une résine silicone hydrosoluble et hydroxylée, obtenue :

→ par co-hydrolyse :

- d'au moins un siiane ($S_1$) substitué par des **Fas** et par des **Sofh** identiques ou différents entre eux, de préférence des -OR° avec R° = radical hydrocarboné, avantageusement alkyle ;
- avec au moins un silane ($S_2$) substitué par des **Sofh** identiques ou différents entre eux et par rapport à ceux de ($S_1$), à l'exclusion de substituants **Fas** ;

→ par hétérocondensation des hydrolysats dérivant des silanes $S_1$ et $S_2$,
→ puis par « stripping » ou entrainement à la vapeur des hydrolysats dérivant des Sofh.

Dans la mesure où les **Sofh** les plus courants sont des alcoxyles -OR°, les mécanismes d'hétérocondensation intervenant sont du type OH/OH et OH/OR°, ces OH ou OR° étant portés par les hydrolysats dérivant des silanes $S_1$, $S_2$. Les hydrolysats dérivant des **Sofh** sont quant à eux des alcools, dans ce cas de figure. Ainsi en pratique, le silane $S_1$ est avantageusement un trialcoxysilane, de préférence un triméthoxysilane, un triéthoxysilane, un méthyldiméthoxysilane ou un méthyldiéthoxysilane, porteur d'une fonction **Fas** aminée du type :

- aminopropyle$(H_2N)(CH_2)_{-3}$

- N-méthyl-3-aminopropyle $(H_3CNH)(CH_2)$-$_3$
- N-aminoéthyl-3-aminopropyle $(H_2N)(CH_2)_2NH(CH_2)$-$_3$
- $C_6H_5CH_2NH(CH_2)_2$ $(NH)(CH_2)$-$_3$
- 3-uréidopropyle : $(H_2N\ CO\ NH)(CH_2)$-$_3$
- 3-4,5-dihydroimidazole-1-yl-propyle :

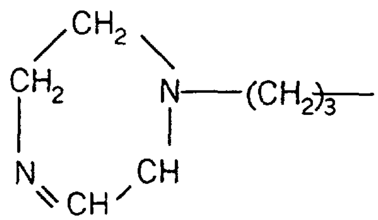

- 3-méthacryloxypropyl : $(H_2C = C)(CH_3)$ $(COO)(CH_2)_3$-
- 3-glycidyloxypropyl :

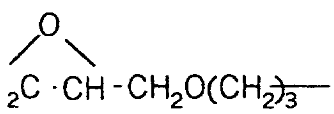

,

(les autres substituants des Si du promoteur (B) étant exempts de **Sofh**).

- 3-mercaptopropyl : $(HS)(CH_2)$-$_3$
- 3-chloropropyle : $(Cl)(CH_2)$-$_3$

S'agissant de $S_2$, les **Sofh** qu'il comprend, sont de préférence des radicaux alcoxyles, avantageusement en $C_1$-$C_6$, par exemple : méthoxy, éthoxy ou propoxy.
Ce silane $S_2$, de préférence un alcoxysilane, peut également comporter au moins un substituant alkyle, avantageusement en $C_1$-$C_6$, par exemple : méthyle, éthyle, propyle.
Ces résines produites par hétérocondensation de $S_1$ et $S_2$ sont décrites, notamment, dans la demande de brevet européen N° **0 675 128**.
Selon un deuxième mode de mise en oeuvre de l'invention, le promoteur (B) est une résine obtenue :

→ par hydrolyse d'un silane $S_3$ substitué par des **Fas** et des **Sofh**,
→ par homocondensation des silanes $S_3$ hydrolysés,
→ et par « stripping » entrainement à la vapeur des hydrolysats dérivant des **Sofh**.

Le silane $S_3$ est, de préférence, un alcoxysilane **Fas**-substitué. Il peut s'agir, par exemple, d'un trialcoxysilane permettant d'obtenir une résine hydroxylée à motifs T, dénommée également résine T(OH).
Ce silane $S_3$ peut être du même type que le silane $S_1$ tel que défini supra. Les fonctions **Fas** substituant $S_3$ répondent à la même définition que celle donnée ci-dessus.
Comme illustration de ce deuxième mode de mise en oeuvre d'un promoteur (B) de type résine POS, on peut citer celui obtenu à partir de γ-aminopropyltriéthoxysilane hydrolysé et soumis à un « stripping » de l'éthanol formé par l'hydrolyse. La résine polyhomocondensée obtenue, est un mélange d'oligomères contenant de 4 à 10 silicium et comprenant des motifs :

$$T(OH) = RSi(OH)O_{2/2}$$

$$T = R\ SiO_{3/2}$$

$$T(OH)_2 = RSi(OH)_2O_{1/2}$$

$$T(OH)_3 = RSi(OH)_3,$$

ces motifs étant respectivement présents en quantité décroissante et
$R = NH_2-(CH_2)_3$-. Il s'agit par exemple d'une résine T(OH) aminée.

Le promoteur (B) peut être mis en oeuvre dans la dispersion selon l'invention, soit sous la forme naturelle dans laquelle il se trouve à l'état pur, soit sous forme de solution aqueuse, cette dernière forme étant préférée.

Le catalyseur ( C ) est, de préférence, un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain soit des distannoxanes, soit des polyorganostannnoxanes, soit le produit de réaction d'un sel d'étain, en particulier d'un dicarboxylate d'étain sur du polysilicate d'éthyle, comme décrit dans le brevet **US-A-3 862 919**.

Le produit de réaction d'un silicate d'alkyle ou d'un alkyltrialcoxysilane sur le diacétate de dibutylétain comme décrit dans le brevet belge **BE-A-842 305**, peut convenir aussi.

Selon une autre possibilité, on a recours à un sel d'étain II, tel que $SnCl_2$ ou l'octoate stanneux.

Les sels d'étain préférés sont les bischélates d'étain (**EP-A-147 323** et **EP-A-235 049**), les dicarboxylates de diorganoétain et, en particulier, les diversatates de dibutyl-ou de dioctylétain (brevet britannique **GB-A-1 289 900**), le diacétate de dibutyl- ou de dioctylétain, le dilaurate de dibutyl-ou de dioctylétain ou les produits d'hydrolyse des espèces précitées (e.g. les diorgano et polystannoxanes).

On utilise de 0,01 à 3, de préférence de 0,05 à 2 parties de sel d'organoétain pour 100 parties de (A).

Selon des variantes, on peut également utiliser comme catalyseur (C) des acides ou bases fortes (KOH, NaOH) ou des amines.

Quand on met en oeuvre de **l'agent tensioactif** (D) dans la dispersion suivant l'invention, il s'agit, de préférence, d'un tensioactif non ionique. Ces agents tensioactifs non ioniques sont bien entendu les mêmes que ceux que l'on peut ajouter éventuellement aux émulsions (A) obtenues par polymérisation en émulsion, comme indiqué plus haut.

Dans le cadre de la présente invention des agents tensioactifs anioniques peuvent éventuellement être employés. A titre d'exemples, on peut citer les sels des métaux alcalins des acides hydrocarbonés aromatiques sulfoniques ou alkylsulfuriques et les agents tensioactifs non ioniques préférés sont les alkylphénols polyoxyéthylénés ou les alcools gras polyoxyéthylénés.

La quantité de tensioactif utilisable est celle couramment mise en oeuvre pour la mise en émulsion telle que décrite en particulier dans les brevets précités et dans le brevet **US-A-2 891 920**.

Les tensioactifs non ioniques (de préférence), ioniques ou amphotères, peuvent être employés seuls ou en mélange entre eux.

Le promoteur d'adhérence (B) peut jouer le rôle de réticulant seul ou en complément d'un réticulant (E), de préférence, formé par au moins une résine silicone hydroxylée présentant, par molécule, au moins deux motifs siloxyles différents choisis parmi ceux de type M, D, T et Q, l'un au moins étant un T ou un Q; les résines de type MQ, MDQ, TD et MDT étant particulièrement préférées.

Avantageusement, cette résine silicone hydroxylée (E) possède une teneur pondérale en groupe hydroxyle comprise entre 0,1 et 10 % et, plus préférablement encore, entre 1 et 6 % en poids.

Ces résines silicones sont des POS ramifiés bien connus, dont les procédés de préparations sont décrits dans de très nombreux brevets.
On peut utiliser les résines qui sont solides ou liquides, de préférence liquides, à température ambiante. Ces résines peuvent être incorporées dans les émulsions aqueuses telles quelles ou en solution dans un solvant organique ou une huile silicone, ou bien sous forme d'émulsion aqueuse.

Des émulsions aqueuses de résine silicone utilisables sont décrites, par exemple, dans les brevets **US-A-4 028 339, US-A-4 052 331, US-A-4 056 492, US-A-4 525 502** et **US-A-4 717 599**.

Cette résine (E) facultative réticulant par condensation est, de préférence, exclusivement substituée par des fonctions condensables de type hydroxyle, à l'exclusion des groupements organofonctionnels hydrolysables **Sofh** e. g. alcoxy, susceptibles de générer des COV après condensation. En outre, par nature, cette résine (E) est bien évidemment exempte de COV.

Selon des variantes, le réticulant (E) peut également être choisi parmi les produits suivants siliconates, silicates, silices (en poudre ou colloïdales) et leurs mélanges. Tous ces produits peuvent être utilisés seuls ou en mélange avec ou être associés aux résines hydroxylées (E) décrites supra.

Conformément à une modalité intéressante de l'invention, la dispersion comporte une charge F siliceuse ou non, de préférence sélectionnée parmi les produits suivants : silice précipitée ou non, silice colloïdale ou en poudre, carbonates et leurs mélanges.

Les carbonates, par exemple de calcium, constituent des charges préférées.

D'autres exemples de charges (F) utilisables seules ou en mélange sont le noir de carbone, le dioxyde de titane, l'oxyde d'aluminium, l'alumine hydratée, la vermiculite expansée ou non, l'oxyde de zinc, le mica, le talc, l'oxyde de fer, le sulfate de baryum, la chaux éteinte. Ce sont là des charges minérales non siliceuses semi-renforçante ou de bourrage, ayant une granulométrie généralement comprise entre 1 et 300 µm et une surface BET inférieure à 50 $m^2$ / g.

Les éventuelles charges siliceuses utilisables sont renforçantes ou semi-renforçantes. Il peut s'agir par exemple de silice colloïdale, de poudre de silice de combustion et de précipitation ou des mélanges de celles-ci. La silice de combustion est préférée. On peut toutefois utiliser également des charges siliceuses semi-renforçantes, telles que des terres de diatomée ou du quartz broyé.

Ces poudres siliceuses ont une surface spécifique BET supérieure à 50 $m^2$/g de préférence comprise entre 150 et 350 $m^2$/g.

Ces charges(F) sont introduites dans l'émulsion sous forme de poudre sèche ou sous forme de dispersion colloïdale, par exemple, par simple mélange.

Aux dispersions conformes à la présente invention, peuvent être ajoutés divers additifs permettant de modifier leurs propriétés et celles des élastomères formés à partir desdites dispersions par élimination d'eau. On peut incorporer, par exemple :

- un ou plusieurs dispersants (G) constitués par exemple par des polyacrylates de sodium ou l'hexamétaphosphate de sodium.
- un ou plusieurs plastifiants (H) choisis de préférence parmi les huiles silicones non réactives (bloquées) et/ou parmi les alkylbenzènes, tels que ceux décrits dans la demande de brevet KRAFT N° **2 446 849**.

Comme autres exemples d'additifs, on peut citer les antifongiques (I), les antimousses (J), les agents stabilisants ou épaississants (K) comme la carboxyméthylcellulose ou la gomme xanthane, les bases (L).

En pratique et dans le cas où l'application visée est par exemple le mastic, la composition de la dispersion silicone aqueuse selon l'invention, est avantageusement la suivant

- -(**A**) - 100 parties en poids d'un polydialkylsiloxane α,ω-diOH, cette huile ayant une viscosité η à 25° C, supérieure ou égale à 20 000 mPa.s, de préférence comprise entre 50 000 et 150 000 mPa.s. ;
- -(**B**)- 0,5 à 20, de préférence 3 à 15 parties en poids d'une solution aqueuse, à au moins 5 % en poids d'extrait sec et de préférence à au moins 15 % en poids sec, du promoteur d'adhérence (B) formé par une résine POS hydroxylée, Fas-substituée, à l'exclusion de toute substitution organofonctionnelle hydrolysable (e.g. alcoxy), et exempt de COV, cette résine POS titrant entre 0,5 et 40 % en poids d'OH et entre 10 et 50 % en poids de **Fas**,
- -(**C**)- au plus 3 et de préférence 0,05 à 0,5 parties en poids du catalyseur (C), de condensation de préférence un ou plusieurs sels d'étain,
- -(**D**)- 0,5 à 10, de préférence 2 à 8 parties en poids du tensioactif (D), choisi parmi les ioniques, les amphotères, ou les non-ioniques, ces derniers étant préférés (e.g. alcool polyoxyalkyléné) ;
- -(**E**)- 0 à 20, de préférence 0,5 à 10 parties en poids d'au moins une résine silicone hydroxylée (E) telle que définie ci-dessus, de préférence résine MDT hydroxylée et dont les substituants alkyles = $CH_3$, de η à 25° C comprise entre 100 000 et 200 000 mP.a.s.,
- -(**F**)- 0 à 250, de préférence 0 à 200 parties en poids de charge, de préférence, non siliceuse,
- -(**G**)- 0 à 5 de préférence 0 à 3 parties en poids de dispersant.

Lorsque la dispersion selon l'invention est plus particulièrement - mais non limitativement - destinée à constituer une peinture ou un revêtement semi-épais (RSE), sa composition est avantageusement la suivante :

- -(**A**) - 100 parties en poids d'un polydialkylsiloxane α,ω-diOH, cette huile ayant une viscosité η à 25° C, supérieure ou égale à 20 000 mPa.s, de préférence comprise entre 50 000 et 150 000 mPa.s. ;
- -(**B**)- 0,5 à 20, de préférence 2 à 15 parties en poids d'une solution aqueuse, à au moins 5 % en poids d'extrait sec et de préférence à au moins 15 % en poids sec, du promoteur d'adhérence (B) formé par une résine POS hydroxylée, Fas-substituée, à l'exclusion de toute substitution organofonctionnelle hydrolysable (e.g. alcoxy), et exempt de COV, cette résine POS titrant entre 0,5 et 40 % en poids d'OH et entre 10 et 50 % en poids de **Fas**,
- -(C)- au plus 5 et de préférence 0,05 à 4,5 parties en poids du catalyseur ( C ) de condensation, de préférence un ou plusieurs sels d'étain,
- -(**D**)- 0,5 à 10, de préférence 2 à 8 parties en poids du tensioactif (D), choisi parmi les ioniques, les amphotères, ou les non-ioniques, ces derniers étant préférés (e.g. alcool polyoxyalkyléné) ;
- -(**E**)- 0 à 20, de préférence 0,5 à 10 parties en poids d'au moins une résine silicone hydroxylée (E) telle que définie ci-dessus, de préférence résine DT et/ou MDT hydroxylée et dont les substituants alkyles = $CH_3$, de η à 25° C

comprise entre 100 000 et 200 000 mP.a.s. ;

- -(**F**)- 0 à 250, de préférence 0 à 200 parties en poids de charge, de préférence, non-siliceuse ;
- -(**G**)- 0 à 5 de préférence 0 à 3 parties en poids de dispersant ;
- -(**H**)- 0 à 20, de préférence 0 à 10 parties en poids de plastifiant ;
- -(**I**)- 0,05 à 5, de préférence 0,1 à 1 d'antifongique ;
- -(**J**)- 0,05 à 5, de préférence 0,1 à 1 parties en poids d'antimousse ;
- -(**K**)- 0 à 250, de préférence 0 à 200 parties en poids de stabilisant/épaississant (e.g. gomme xanthane) ;
- -(**L**)- 0 à 10, de préférence 0 à 5 parties en poids de base.

La dispersion aqueuse selon l'invention se présente comme une émulsion biphasique dans laquelle la phase continue est constituée par l'eau et dans laquelle la phase discontinue comprend, notamment, l'huile silicone polydiorganosiloxane (A).

Dans le cas des mastics, la préparation de cette dispersion silicone aqueuse peut, par exemple, être réalisée de la manière suivante :

a) préparation d'un mélange constitué :

- d'au moins une huile silicone $\alpha,\omega$-dihydroxylée (A) visqueuse ($\eta$ > 20 000 mPa.s)
- éventuellement d'une résine silicone hydroxylée (E)
- éventuellement d'une charge (F)
- éventuellement d'un catalyseur de condensation ( C ) (par exemple sel d'étain),

b) émulsification du mélange a) à l'aide de tensioactifs (D) non-ioniques (de préférence) ou ioniques, (éventuellement en mélange), en présence d'une quantité optimale d'eau ; malaxage de ce mélange jusqu'à obtention d'une émulsion fine silicone/eau (de granulométrie moyenne inférieure à 5 $\mu$ et de préférence inférieure à 1$\mu$),
c) dilution à l'eau de manière à ajuster l'extrait sec du mastic final à la valeur désirée (supérieure à 50% et de préférence supérieure à 70 %)
d) ajustement éventuel du pH de l'émulsion à une valeur permettant de faciliter la solubilisation de la résine silicone carboxylée ou aminée dans la phase aqueuse du mastic lors de son incorporation dans le mélange, (pH acide, neutre ou basique),
e) ajout éventuel de dispersant (G),
f) incorporation d'une résine (B) (ou oligomère) silicone, préférentiellement en solution aqueuse, cette résine étant soluble dans l'eau (≥ 5 % et de préférence > 10 %) au pH du mastic
g) Incorporation éventuelle de charges renforçantes (F) (par exemple $CaCO_3$ ou silice)
h) Introduction éventuelle d'un réticulant (E) supplémentaire (par exemple alkylsiliconate, silicate alcalin, silice colloidale, ...) et/ou d'un catalyseur de condensation (C) (par exemple sel d'étain ou de titane) éventuellement sous forme d'émulsion aqueuse si ledit catalyseur n'a pas déjà été incorporé dans le mélange a).

Selon une variante, l'huile silicone (A) de l'étape a) est remplacée par au moins une préemulsion d'huile (A) silicone $\alpha,\omega$-dihydroxylée obtenue par polymérisation en émulsion d'oligomères linéaires et/ou cycliques de très faible viscosité $\eta$ à 25° C (< 1000 mPa.s) selon des techniques connues et évoquées ci-avant.

En pratique, le procédé d'émulsification de la phase silicone (étape b) peut par exemple être celui décrit dans la demande **WO-A-94/09 058**.

Pour l'application mastic, la dispersion aqueuse silicone réticulable en un élastomère adhérent, est une émulsion huile dans eau chargée, dont l'extrait sec est supérieur ou égal à 50 % poids, de préférence à 80 % poids et plus préférentiellement encore compris entre 85 % et 95 % en poids.

Dans le cas des RSE, la préparation de la dispersion peut e.g. être réalisée de la manière suivante :

- a' - préparation d'une émulsion comprenant :

  - Δ huile(s) (A)
  - Δ promoteur(s) d'adhérence (B)
  - Δ tensioactif(s) (D)
  - Δ résine(s) silicone(s) (E)
  - Δ eau ;

- b' - mélange de l'émulsion a' avec le catalyseur (C) et au moins l'un des composés suivants :

- Δ charge(s) (F)
- Δ dispersant(s) (G)
- Δ antifongique(s) (I)
- Δ antimousse(s) (J)
- Δ épaississant(s) (K)
- Δ base(s) (L).

Naturellement, la séquence de préparation peut être b'a' au lieu de a'b'.

Pour l'application peinture réticulable en couche mince RSE, la dispersion auqueuse selon l'invention est formulée de telle sorte que son extrait sec soit compris entre 30 et 70 % en poids, de préférence de l'ordre de 40 %.

Comme cela ressort de ce qui précède, les dispersions selon l'invention conviennent plus particulièrement dans l'industrie du bâtiment, à la réalisation de mastics, de calfeutrage et matériaux d'étanchéité tels que des joints ou bien encore pour préparer des films, peintures, revêtements (RSE) ou autres couches minces.

L'invention a également pour objet tous les produits finis dont notamment les mastics, matériaux d'étanchéification, films, revêtements (RSE), peintures comprenant la dispersion et/ou l'élastomère réticulé obtenu à partir de cette dispersion. Un autre objet de l'invention est l'utilisation du produit (B) tel que défini

supra à titre de promoteur (B) d'adhérence et de cohésion hydrosoluble, dans une supra à titre de promoteur (B) d'adhérence et de cohésion hydrosoluble, dans une dispersion silicone aqueuse, réticulable en un élastomère adhérent par condensation et comprenant :

- -(**A**) - au moins un POS présentant, par molécule, au moins deux groupements condensables, de préférence OH ;
- -(**C**)- au moins un catalyseur de condensation ;
- -(**D**)- éventuellement au moins un tensioactif ;
- -(**E**)- éventuellement un réticulant formé par au moins une résine silicone hydroxylée présentant, par molécule, au moins deux motifs siloxyles différents choisis parmi ceux de type M, D, T et Q ; l'un des motifs étant T ou Q ;
- -(**F**)- éventuellement une charge siliceuse ou non ;
- -(**G**)- éventuellement un ou plusieurs dispersants (G) ;
- -(**H**)- éventuellement un ou plusieurs plastifiants (H) ;
- -(**I**)- éventuellement un ou plusieurs antifongiques (I) ;
- -(**J**)- éventuellement un ou plusieurs antimousses (J) ;
- -(**K**)- éventuellement un ou plusieurs stabilisants ou épaississants (K) ;
- -(**L**)- éventuellement une ou plusieurs bases (L).

Les dispersions selon l'invention sont en réalité des systèmes précurseurs de réticulats (élastomères), ces précurseurs se présentent sous forme monocomposant réticulable par élimination d'eau, par exemple grâce au séchage résultant d'une mise dans des conditions ambiantes.

Le système précurseur préféré selon l'invention est du type monocomposant. Dans un tel cas de figure, les charges (F) sont nécessaires à la stabilité du système.

Mais il peut également être pluricomposant, par exemple bicomposant, réticulable par mélange des composants juste avant l'application.

Un système bicomposant est formé par deux parties P1, P2 distinctes, destinées à être mélangées pour former la dispersion, l'une de ces parties P1, P2 contenant l'huile (A) et l'autre l'agent réticulant, le catalyseur (C) étant présent dans l'une seulement des parties P1, P2.

Ces systèmes précurseurs constituent d'autres objets s'insérant parfaitement dans le cadre de la présente invention.

Les dispersions selon l'invention présentent le grand avantage d'être stables, aisément manipulables et utilisables, et de conduire à des élastomères réticulés doués d'excellentes propriétés mécaniques : dureté, résistance à la rupture, allongement à la rupture, module d'élasticité, résilience, élasticité, souplesse et ce, aussi bien juste après leur obtention qu'après vieillissement. Ces propriétés mécaniques sont adaptables à l'application visée.

Par ailleurs, ces élastomères réticulés ont à leur crédit un faible coût de revient, une bonne résistance à la flamme, une thixotropie satisfaisante et un temps court de réticulation. Enfin, et surtout ces élastomères réticulés ont pour qualité majeure leur bonne adhérence sur les supports usuels tels que le verre, le bois, ies métaux ou autres matériaux céramiques tout en étant exempts de COV. Leur nature aqueuse exclusive de COV offre de grandes facilités d'utilisation, en particulier la possibilité de lavage à l'eau du mastic ou du RSE une fois réticulé après application.

Enfin, il est à souligner des propriétés particulièrement intéressantes pour les RSE issus de cette dispersion, à savoir l'imperméabilité à l'eau, la perméabilité à la vapeur d'eau et la résistance à l'abrasion.

Cela offre de nombreux débouchés à l'invention dans le domaine des mastics, matériaux d'étanchéification, matériaux pour former des films, peintures, revêtements RSE réticulables en couches minces entre autres.

Les exemples qui suivent permettront de mieux comprendre l'invention et d'en saisir tous ses avantages ainsi que ses variantes de réalisation.

## EXEMPLES

### Exemple 1 : Mastic

1.1. Préparation de l'émulsion concentrée dans un réacteur IKAVISK:

Dans un réacteur en verre IKAVISK de 1,5 litre, équipé d'une pale raclante entrainée par un moteur Stöber, on introduit dans l'ordre :

- (**A**) - - 580 g d'huile silicone $\alpha,\omega$ - dihydroxylée , de viscosité = 135 000 mPa.s, de Mw = env. 140 000, et titrant env. 300 ppm d'OH,
- (**E**) - - 11,6 g de résine MDT hydroxylée avant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$,
- (**D**) - 34,8 g de Génapol X080 de la société HOECHST, qui est un alcool isotridécylique polyoxyéthyléné (à 8 OE en moyenne),
- 29 g d'eau déminéralisée.

On met sous refroidissement, par circulation d'eau froide dans le socle du réacteur IKA, puis on agite le mélange à 100 tours/min pendant 1 heure et 50 minutes. La température en fin de mélangeage atteint 26,5°C. On obtient ainsi une émulsion concentrée d'huile silicone dans l'eau, qui a la consistance d'un gel, dont la granulométrie caractérisée avec un COULTER LS130 (de la société COULTRONICS) a une valeur moyenne de 0,39 µm.

1.2. Formulation du mastic:

La vitesse d'agitation est réduite à 70 tours/min.
On dilue progressivement en introduisant sous agitation 135 g d'eau déminéralisée.
On introduit ensuite progressivement (en 10 minutes) et sous agitation :

- (**G**) - - 13,9 g de Coatex P50 (polyacrylate de sodium de la société COATEX),
- (**B**) - - 29 g de solution aqueuse de la résine (B), solution commercialisée par la société HULS sous la dénomination DYNASYLAN HS 2776 ; il s'agit d'une solution aqueuse à 2,56 moles/l (exprimé en silicium) d'un oligomère siloxane organofonctionnel, exempt d'alcool et de groupements alcoxy résiduels, obtenu par cohydrolyse de DYNASYLAN DAMO (aminoéthylaminopropyltriéthoxysilane) et de DYNASYLAN MTES (méthyltriéthoxysilane), puis stripping de l'éthanol ; la solution aqueuse présente un extrait sec de 30 % en poids (mesuré sur 2 g de solution dévolatilisé pendant 15 min à 120° C,
- (**F**) - - 290 g de carbonate Socal 312 (de Solvay),
- (**F**) - - 290 g de carbonate BLR3 (de OMYA),
- (**C**) - 2,9 g d'émulsion aqueuse catalytique contenant 37,6 % en poids de dilaurate de dioctylétain.

Le mastic est débullé sous vide (40 mm Hg) et sous agitation (5 min), et conditionné en cartouches polyéthylène de 300 ml, étanches à l'air.
Le pH du mastic est égal à 10,5

### Exemple 2 : Mastic

On reproduit l'exemple 1 aux différences près que :

- l'on réduit la dose de résine (E) à 5,8 g,
- et l'on remplace les 29 g de DYNASYLAN HS 2776 de HULS par 47 g de DYNASYLAN 2759 de HULS, qui est aussi une solution aqueuse d'un oligomère siloxane organofonctionnel, exempt d'alcool et de groupements alcoxy résiduels, mais dont les restes organiques sont à base d'époxyglycol (produit non aminé), ayant un extrait sec de 37 % en poids (mesuré sur 2 g de solution dévolatilisé pendant 15 min à 120° C).

### Exemple 3 : Mastic

On reproduit l'exemple 1 aux différences près que :

- l'on réduit la dose de résine (E) 4509 à 5,8 g,
- et l'on remplace les 29 g de DYNASYLAN HS 2776 de HULS par 36,7 g de DYNASYLAN 2908 de HULS, qui est aussi une solution aqueuse d'un oligomère siloxane organofonctionnel, exempt d'alcool et de groupements alcoxy résiduels, mais dont les restes organiques sont à base d'uréidoalkyl, ayant un extrait sec de 24 % en poids (mesuré sur 2 g de solution dévolatilisé pendant 15 min à 120°C).

**Exemple 4 : Mastic**

4.1. Mise en oeuvre de résine (B) hydrosoluble aminée

Résine B : il s'agit d'une solution aqueuse de résine T(OH) aminée préparée en réalisant une solution aqueuse à 40 % de gamma-aminopropyl triméthoxysilane puis stripping de l'éthanol formé par hydrolyse ; la solution est parfaitement limpide, et présente un extrait sec de 23 %. Il s'agit d'un mélange d'oligomères contenant de 4 à 10 silicium et ayant une teneur en $NH_2$ de 2,9 % (+/- 0,3 %). Sa viscosité à 25° C est de 4 cst (+/-1 cst).

Caractérisation par RMN : les groupements éthoxy et l'éthanol ne sont plus détectables (par RMN 1H 360 Mhz dans CD3OD, ou par CPG) ; la répartition molaire (en % moles Si) déterminée par RMN 29 Si à 59 Mhz (dans le DMSO, réf = TMS) est la suivante :

| motifs | T(OH)3 | T-OH)2 | TOH | T |
|---|---|---|---|---|
| déplacements chimiques (ppm) - | - 42,3 | - 51 | 58/-59 | -65/-68 |
| % moles Si | 4,0 | 16,9 | 46,2 | 32,9 |

4.2. On reproduit l'exemple 1 en remplaçant la résine B utilisée par la résine B selon 4.1., et en remplaçant le tensioactif nonionique par du laurylsulfate de sodium (44,8 g) et en faisant l'émulsification en présence de 39,2 g d'eau.

**Exemple 5 : Mastic**

On reproduit l'exemple 1 sans mettre en oeuvre de réticulant (E) et en remplaçant les 29 g de DYNASYLAN HS 2776 par 75,4 g de solution de résine B selon 4.1.

**Exemple comparatif 6 : Mastic**

On reproduit l'exemple 1 en mettant en oeuvre 40,6 g de résine (E) telle que définie à l'exemple 1, mais en omettant la solution de résine (B).

**Exemple 7 : Mastic**

On reproduit l'exemple 4.1. mais en omettant le catalyseur (C).

**METHODES D'EVALUATION:**

Propriétés mécaniques initiales:

24 heures après préparation du mastic, la dispersion est étalée avec une râcle calibrée pour réaliser une pellicule (film) de 2 mm d'épaisseur qu'on laisse sécher pendant 10 jours avant de mesurer les propriétés mécaniques suivantes :

- la dureté Shore A (DUR) selon la norme ASTM-D-2240
- la résistance à la rupture (R/R) selon la norme AFNOR-T 46 002 correspondant à ASTM-D 412, en Mpa,
- l'allongement à la rupture (A/R) en % selon AFNOR-T 46 002,
- le module élastique Mod100 à 100 % d'allongement selon la norme AFNOR-T 46 002, en MPa.

Propriétés mécaniques après vieillissement accéléré:

Les mesures mécaniques précédentes sont refaites sur un mastic stocké en cartouche étanche pendant 14

jours à 50°C.

Adhérence:

Mesure qualitative: 24 heures après préparation du mastic celui-ci est déposé sous forme d'un cordon de 2 à 3 mm d'épaisseur sur un support en verre clair, bois, aluminium ou béton. Après séchage de ces éprouvettes pendant 14 jours, le niveau d'adhérence est évalué en créant avec une lame de cutter une amorce de rupture à l'interface entre le mastic sec et le support, puis en cherchant à propager cette rupture par pelage. L'adhérence est considérée :

- excellente (notée +++) lorsque le cordon ne peut être décollé de son support
- bonne (notée ++) lorsque le cordon est décollé difficilement et par petites surfaces
- médiocre (notée +) lorsque le cordon se décolle assez facilement, même s'il reste en périphérie quelques points d'ancrage
- nulle (notée 0) lorsque le cordon se décolle sans difficulté

On évalue également le mode de rupture, qui peut être majoritairement adhésif « RA » (à l'interface mastic/support) ou cohésif « RC » (au sein du mastic).

Mesure quantitative

Une éprouvette de collage est constituée en emprisonnant un parallélépipède de mastic (12 X 6 X 50 mm) entre 2 éprouvettes en verre ou en béton (interface mastic/support = 50 X 6 mm) et des cales antiadhérentes en téflon. Une interface mastic/air de 50 X 12 mm est laissée libre de manière à autoriser le séchage du mastic.

La durée totale de séchage est de 28 jours, mais les cales sont retirées de l'assemblage après quelques jours de manière à faciliter le séchage. L'éprouvette séchée 28 jours est étirée au dynamomètre, la courbe de traction ainsi obtenue permettant de déterminer l'allongement et la force (ou module) correspondant à la rupture du complexe (sandwich) support/mastic/support. On examine le mode de rupture, qui peut être adhésif (à l'interface mastic/support) ou cohésif (au sein du mastic).

RESULTATS - TABLEAU RECAPITULATIF:

| Exemples | 1 | 2 | 3 | 4 | 5 | Exemple comparatif 6 | 7 |
|---|---|---|---|---|---|---|---|
| Granulométrie de l'émulsion (µm) | 0,39 | 0,37 | 0,37 | 0,94 | 0,37 | 0,94 | 0,39 |
| pH du mastic | 10 | 9,5 | 9,5 | 10,5 | 10,5 | 9 | 10,5 |
| **Propriétés du film de 2 mm** | | | | | | | |
| dureté (Shores A) | 35 | 0 | 8 | 36 | 0 | 22,5 | 1 |
| résistance rupture (MPa) | 1,23 | NM | 0,64 | 1,03 | NM | 0,72 | NM |
| Allongement Rupture (%) | 440 | NM | 1145 | 200 | NM | 576 | NM |
| Module 100% (MPa) | 0,73 | NM | 0,16 | 0,85 | NM | 0,32 | NM |
| Adhérence qualitative sur Verre | RC | RA (0) | RC | RC | NM | RA(0) | NM |
| Adhérence qualitative sur Béton | RA (++) | RA (+) | RC | RA (++) | NM | RA (0) | NM |
| Adhérence qualit.sur aluminium | RA (++) | RA (0) | RC | RA (++) | NM | RA (0) | NM |
| Adhérence qualitative sur Bois | RC | RA (0) | RA (0) | RC | NM | RA(0) | NM |
| **Propriétés après 14 jours à 50° C** | | | | | | | |
| dureté (Shores A) | 31 | 10,5 | 20 | 41 | 11 | 28 | 9 |
| résistance rupture (MPa) | 1,08 | 1 | 0,98 | 1,22 | 0,5 | 0,72 | 0,41 |
| Allongement Rupture (%) | 442 | 1137 | 703 | 292 | 644 | 343 | 760 |
| Module 100% (MPa) | 0,6 | 0,18 | 0,38 | 0,9 | 0,23 | 0,4 | 0,19 |
| Adhérence qualitative sur Verre | ++ | | | | +++ | 0 | - |
| **Adhérence quantitatives (mastic frais) sur verre :** | | | | | | | |
| Résistance à la rupture (MPa) | 0,66 | 0,05 | 0,46 | - | 0,17 | NM | 0,06 |
| Allongement à la rupture (%) | 160 | 5 | 370 | - | 500 | NM | 160 |
| Type de rupture | RC | RA | RA | - | RA | RA | RA |
| **sur béton:** | | | | | | | |
| Résistance à la rupture (MPa) | 0,45 | 0,17 | 0,21 | - | - | NM | - |
| Allongement à la rupture | 60 | 40 | 60 | - | - | NM | - |
| Type de rupture | RA | RA | RA | - | - | - | - |
| sur aluminium : | | | | | | | |
| Résistance à la rupture (mPa) | 0,6 | 0,12 | 0,48 | - | 0,04 | - | - |
| Allongement rupture (%) | 180 | 20 | 560 | - | 40 | - | - |
| Type de rupture | RC | RA | RC | - | RA | - | - |

RA = rupture adhésive ; RC = rupture cohésive ; NM = non mesurable

**Exemple 8 : Revêtement semi-épais (RSE)**

8.1. Préparation d'une dispersion colloïdale des charges et autres additifs destinés à être inclus dans la dispersion précurseur de RSE.

Dans un réacteur en verre IKAVISK de 1,5 litre, équipé d'une pale raclante entrainée par un moteur STÖBER, on introduit dans l'ordre :

- 47,8 g d'eau distillée
- (K) - 163,0 g de solution de stabilisant formé par une solution RHODOPOL (gomme xanthane = grosse molécule formée de sucre cyclique et d'acide - pm$2.10^6$) à 1 % dans l'eau distillée, commercialisé par la société RHONE POULENC.
- (G) - 9,28 g de dispersant COATEX P50 (polyacrylate de sodium),
- (I) - 1,17 g d'antifongiques TPI 12-15 (solution de dérivés d'isotiazolinone dans un glycol, commercialisée par la société PHAGOGENE),
- (J) - 1,02 g d'antimousse BEVALOÏD 6001 constitué par une émulsion aqueuse d'un mélange de savon métallique et de tensioactif non ionique doux, dans une huile hydrocarbonnée hautement raffinée ; cet anti-mousse étant commercialisé par la société RHONE POULENC.

On agite ce mélange à 100 tr/min puis on introduit progressivement sous agitation de plus en plus forte et sous refroidissement :

- (F) - 44,7 g de charge formée par du dioxyde de titane RL 60 provenant de la société RHONE POULENC,
- (F) - 44,7 g de charge formée par du TIXOLEX 17 (silicoaluminate de sodium commercialisé par RHONE POULENC),
- (F) - 402,1 g de charge carbonate BLP2, commercialisée par la société OMYA.

Après l'ajout des charges (F) ci-dessus, la vitesse d'agitation est d'environ 600 tr/min et la température est de 30° C. Cette agitation est maintenue pendant 30 min.

8.2 Préparation de la dispersion silicone aqueuse, précurseur d'un RSE

On introduit dans la dispersion colloïdale, sous agitation, une émulsion aqueuse silicone préparée comme indiquée ci-après :

dans un réacteur en verre IKAVISK de 1,5 l équipé d'une pâle raclante, entrainée par un moteur STÖBER, on introduit dans l'ordre :

- (A) - 387 g d'huile silicone $\alpha,\omega$-dihydroxylé, de viscosité = 80 000 mPa.s, de $M_w$ environ égal à 100 000 et titrant environ 350 ppm d 'OH,
- (E) - 19 g de résine (E) comprenant des motifs DT et hydroxylé à raison de 2,2 % d'OH, les motifs $CH_3 SiO_{3/2}$ étant présents à hauteur de 70 % en poids tandis que les motifs $(CH_3)_2 SiO_{2/2}$ représentent 30 % en poids ; cette résine ayant une masse moléculaire d'environ 1 300 et un rapport molaire $CH_3/Si$ = 1,77 ;
- (D) - 23,2 g de tensioactifs GENAPOL X 0,80 (alcool isotridécylique polyoxyéthyléné) à 8 OE en moyenne, commercialisé par la société EUXT ;
- 19,3 g d'eau déminéralisée.

Le réacteur est réfrigéré par circulation d'eau froide dans son socle. L'agitation mise en oeuvre est de 100 tr/min pendant 1 h 50 min. La température en fin de mélange est de l'ordre de 26 ° C. On obtient ainsi une émulsion concentrée d'huile silicone dans l'eau. Cette émulsion a la consistance d'un gel. On réduit l'agitation à 70 tr/min.

On dilue progressivement en introduisant sous agitation 228,4 g d'eau déminéralisée.

On obtient ainsi une émulsion laiteuse dont la granulométrie caractérisée avec un COULTER LS 130 a une valeur moyenne de 0,5 µm.

Après introduction de cette émulsion laiteuse dans la dispersion colloïdale préparée selon 8.1, on ajoute ensuite progressivement, sous agitation :

- (C) - 6,82 g d'émulsion aqueuse catalytique contenant 37,6 % de dilaurate de dioctyle étain ;
- (B) - 20,3 g de résine hydrosoluble aminé du même type que celle employée dans l'exemple 4.1 décrit supa ;
- (L) - 13,0 g de potasse aqueuse à 20 %.

Le RSE ainsi produit est débullé sous vide (40 mm Hg) et sous agitation (5 min).
La composition de l'émulsion obtenue est la suivante (exprimée en parties en poids) :

- Eau 12,36
- (K) - Rhodopol 50 MD à 1 % 42,11
- (G) - Coatex P50 2,40
- (I) - TPI 12.15 0,30
- (J) - Bévaloïd 600 0,26
- (F) - $TiO_2$ (RL 60) 11,54
- (F) - Tixolex 17 11,54
- (F) - $CaCO_3$ BLP2 103,90
- (A) - Huile α,ω dihydroxylée 100,00
- (E) - Résine DT hydroxylée 5,00
- (D) - Génapol x 080 6,00
- Eau 64,00
- (C) - Emulsion catalysante de dilaurate de dioctyl étain 1,76
- (B) - Résine hydrosoluble amine 5,25
- (L) - potasse aqueuse à 20 % 3,37.

**Exemple 9 comparatif: RSE**

On procède comme dans l'exemple 8 remplaçant **50 %** de l'émulsion silicone aqueuse mise en oeuvre en 8.2, par un latex styrène-acrylique **réticulable aux U.V.** de type **Rhodopas** DEA 1022 commercialisé par RHONE POULENC.

**Exemple 10 : RSE**

10.1 Préparation de la dispersion silicone aqueuse

On reproduit l'exemple 8.2 aux différences près que :

- on met en oeuvre à titre de résine (E) 32,9 g de la résine MDT hydroxylées comprenant 0,5 % d'OH en poids et constitués de 62 % en poids de motifs $CH_3SiO_{3/2}$, 24 % en poids de motifs $(CH_3)_2\ SiO_{2/2}$ et 14 % en poids de motifs $(CH_3)_3\ SiO_{1/2}$.
- on dilue le gel avec non pas 228,4 g d'eau déminéralisée mais 237,3 g.

Cette dispersion silicone aqueuse est mélangée avec

- (C) 6,99 g d'émulsion catalytique de dilaurate de dioctyl étain et
- (B) 11,61 g de résine hydrosoluble aminé du même type que celle employée dans l'exemple 4.1. décrit supra.

On laisse cette préparation vieillir 2 jours à 23° C avant de préparer le RSE.

10.2 La dispersion colloïdale est préparée comme dans 8.1.

10.3. Préparation du RSE

- le RSE est préparé par introduction progressive sous agitation, dans la dispersion colloïdale:
- du prémélange (constitué par l'émulsion silicone, l'émulsion catalytique C et de la résine hydrosoluble (B)).
- 12,7 g de solution aqueuse d'amoniaque 20 %.

Le RSE ainsi obtenu est débullé sous vide (40 mm Hg) et sous agitation (5 min).
La composition de l'émulsion obtenue est la suivante (exprimée en parties en poids) :

- Eau 12,36
- (K) - Rhodopol 50 MD à 1 % 42,11
- (G) - Coatex P50 2,40
- (I) - TPI 12.15 0,30
- (J)- Bévaloïd 600 0,26

- (F) - $TiO_2$ (RL 60) 11,54
- (F) - Tixolex 17 11,54
- (F) - $CaCO_3$ BLP2 103,90
- (A) - Huile α,ω dihydroxylée 100,00
- (E) - Résine MDT hydroxylée 8,50
- (D) - Génapol x 080 6,00
- Eau (5 + 61,3) 66,30
- (C) - Emulsion catalysante de dilaurate de dioctyl étain 1,81
- (B) - Résine hydrosoluble amine 3,00
- (L) - potasse aqueuse à 20 % 3,14.

**Exemple 11 : Evaluation des propriétés des RSE des exemples 8, 9 comp et 10**

*11.1 Méthodes d'évaluation*

- Perméabilité à la vapeur d'eau (Sd)
  Selon la norme EN 1062-2.
  Sur film de RSE d'environ 180 µm sec après un séchage accéléré de 24 h à 23° C et 50 % HR puis 24 h à 50° C à l'étuve ; un vieillissement de 3 cycles trempage dans l'eau 8 h à 23° C/séchage 16 h à 50° C ; terminé par un reconditionnement de 3 jours à 23°C et 50% HR.
- Absorption d'eau liquide (W)
  Selon la norme DIN 52617.
  Test réalisé sur film d'environ 180 µm déposé sur carreau de plâtre séché 24 h à 23°C puis 24 h à 50°C.
  Conditionnement 3 jours à 23° C et 50 % HR.
  Mesures réalisées après 3 lavages par absorption d'eau durant 24 h intercalées de séchage à 40°C.
  Reconditionnement 7 jours à 23° C et 50 % HR.
  Résultat : eau absorbée en 24 h par $m^2$ de RSE.
- Allongement à la rupture
  Selon la norme AFNOR - T46002
  Test réalisé sur dynamomètre avec éprouvette H2 d'environ 1 mm d'épaisseur, étirée à 50 mm/min ; après un séchage de 28 jours à 23° C et 50 % d'humidité relative.
- Abrasion humide
  Selon la norme AFNOR N° 300 82
  Test réalisé sur plynomètre Doitteau
  Sur film d'environ 180 µm sec déposé sur fibrociment ayant eu un séchage accéléré de :
  4 j à 23°C - 50 % HR
  puis 9 j à 50°C.
  Reconditionné 24 h minimum à 23° C - 50 % HR.
  Le résultat est exprimé en nombre de coups de brosse nécessaire pour obtenir une usure de 50 % du revêtement.
- Brillant spéculaire
  Selon la norme NF T 30 064
  Mesure de la réfection ou de la diffusion d'un faisceau lumineux sous 85°C, réalisée avec un Glossmaster 507 m. Le courant produit proportionnel à l'intensité lumineux, est significatif de l'état de brillance.

*11.2 Résultats*

| Exemples | 8* | 9 comp | 10 |
|---|---|---|---|
| Sd : perméabilité vapeur (m) après vieillissement par lavages | 0,28 | 0,46 | 0,30 |
| cu : absorption d'eau liquide ($kg/m^2\sqrt{h}$) | < 0,1 | < 0,1 | - |
| Allongement à la rupture (%) | 200 | > 200 | 300 |
| Abrasion humide (nombre de coups) | 10 000 | - | > 10 000 |

* les résultats de l'exemple 8 sont inchangés sans potasse.

(suite)

| Exemples | 8* | 9 comp | 10 |
|---|---|---|---|
| Brillant spéculaire | environ 4 | environ 10 | - |

* les résultats de l'exemple 8 sont inchangés sans potasse.

## Revendications

**1.** Dispersion silicone aqueuse réticulable, par condensation, en un élastomère adhérent, **caractérisée:**

- **en ce qu'**elle comprend des constituants condensables hydroxylés et exempts de Substituants organo fonctionnels hydrolysables (**Sofh**), et susceptibles de générer, in situ, des composés organiques volatils (COV), lors de l'hydrolyse et/ou lors de la réticulation par condensation ;
- **en ce qu'**elle est exempte de COV ;
- **en ce qu'**elle est exempte d'alcool polyvinylique ;
- et **en ce qu'**elle est constituée par :
  - **A** - au moins un polyorganosiloxane (POS) présentant, par molécule, au moins deux groupements OH;
  - **B** - au moins un promoteur d'adhérence hydrosoluble capable de se dissoudre dans l'eau à une température de 25°C à hauteur d'au moins 5 % en poids et choisi parmi les silanes et/ou les POS hydroxylés et porteurs, par molécule d'au moins un hydroxyle et d'au moins une Fonction hydrophile d'ancrage sur support (**Fas**), ainsi que parmi les mélanges de ces produits, **à l'exclusion** des produits d'hydrolyse de silanes époxyfonctionnels alcoxylés, lesdites fonctions **Fas** identiques ou différentes entre elles étant choisies dans le groupe comprenant les fonctions : amino, époxy, acrylo, méthacrylo, uréido, mercapto, thiol, chloroalkyle ;
  - C - au moins un catalyseur organométallique de condensation ;
  - **D** - éventuellement au moins un tensioactif ;
  - **E** - et éventuellement au moins un réticulant avec les conditions selon lesquelles :
    - 1 * en présence d'un tel réticulant (E), le promoteur (B) peut ne comporter qu'au moins un groupement OH par molécule,
    - 2 * tandis qu'en l'absence d'un tel réticulant (E), le promoteur (B) et/ou le POS (A) comporte au moins trois groupements OH.

**2.** Dispersion selon la revendication 1 **caractérisée en ce qu'**elle renferme obligatoirement, outre les constituants (A), (B) et (C), au moins un tensioactif (D) et au moins un réticulant (E).

**3.** Dispersion selon la revendication 1 ou 2, **caractérisée en ce que** le POS (A) est une huile de formule:

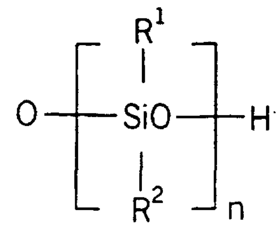

avec n ≥ 10, $R^1$, $R^2$ identiques ou différents et correspondant à un hydroxyle, un (cyclo)alkyle en $C_1$-$C_6$ ou un (cyclo) alcényle en $C_1$-$C_6$ ou bien encore à une amine.

**4.** Dispersion selon l'une quelconque des revendications 1 à 3 **caractérisée**

- **en ce que** le promoteur d'adhérence hydrosoluble (B) est un polydiorganosiloxane hydroxylé linéaire à motifs siloxyles D et/ou MD et/ou une résine POS hydroxylée comprenant des motifs siloxyles T et éventuellement M et/ou D et/ou Q ou bien encore des motifs siloxyles Q et M et/ou D et/ou T,

- **en ce que** ce promoteur est exempt de COV et n'est pas substitué par des **Sofh**,
- et **en ce que** ce promoteur est porteur d'au moins une **Fas** liée à au moins un Si.

**5.** Dispersion selon la revendication 4, **caractérisée en ce que** le promoteur (B) est une résine sélectionnée parmi celles du type T(OH), DT(OH), DQ(OH), DT(OH), MQ(OH), MDT(OH), MDQ(OH) ou les mélanges de celles-ci.

**6.** Dispersion selon l'une quelconque des revendications 1 à 5, **caractérisée en ce que** le promoteur d'adhérence (B) joue le rôle de réticulant seul ou en complément d'un réticulant (E) formé :

- par au moins une résine hydroxylée présentant, par molécule, au moins deux motifs siloxyles différents choisis parmi ceux de type M, D, T et Q ; l'un au moins étant un T ou un Q ;
- et/ou par au moins l'un des produits suivants :

siliconates, silicates, silices (en poudre ou colloïdales).

**7.** Dispersion selon l'une quelconque des revendications 1 à 6, **caractérisée en ce qu'**elle comporte en outre:

- ♦ une charge (F) siliceuse ou non, sélectionnée parmi les produits suivants : silice précipitée ou non, silice colloïdale ou en poudre, carbonates et leurs mélanges,
- ♦ éventuellement un ou plusieurs dispersants (G)
- ♦ éventuellement un ou plusieurs plastifiants (H)
- ♦ éventuellement un ou plusieurs antifongiques (I)
- ♦ éventuellement un ou plusieurs antimousses (J)
- ♦ éventuellement un ou plusieurs stabilisants ou épaississants (K)
- ♦ éventuellement une ou plusieurs bases (L).

**8.** Mastic, matériau d'étanchéification, film, peinture ou revêtement (RSE) **caractérisé en ce qu'**il est constitué par la dispersion selon l'une quelconque des revendications 1 à 7 et/ou par l'élastomère réticulé issu de cette dispersion.

**9.** Utilisation du produit (B) tel que défini dans l'une quelconque des revendications 1, 4 et 5, à titre de promoteur (B) d'adhérence et de cohésion hydrosoluble, dans une dispersion silicone aqueuse, réticulable en un élastomère adhérent par condensation et constituée par:

- -(**A**) - au moins un POS présentant, par molécule, au moins deux groupements OH ;
- -(**C**)- au moins un catalyseur de condensation ;
- -(**D**)- éventuellement au moins un tensioactif ;
- -(**E**)- éventuellement un réticulant formé par au moins une résine silicone hydroxylée présentant, par molécule, au moins deux motifs siloxyles différents choisis parmi ceux de type M, D, T et Q ; l'un au moins de ces 2 motifs étant T ou Q ;
- -(**F**)- éventuellement une charge siliceuse ou non
- -(**G**)- éventuellement un ou plusieurs dispersants (G)
- -(**H**)- éventuellement un ou plusieurs plastifiants (H)
- -(**I**)- éventuellement un ou plusieurs antifongiques (I)
- -(**J**)- éventuellement un ou plusieurs antimousses (J)
- -(**K**)- éventuellement un ou plusieurs stabilisants ou épaississants (K)
- -(**L**)- éventuellement une ou plusieurs bases (L).

## Patentansprüche

**1.** Durch Kondensation zu einem adhäsiven Elastomeren vernetzbare, wäßrige Silikondispersion , **dadurch gekennzeichnet:**

. **daß** sie kondensierbare Bestandteile umfaßt, die hydroxyliert und frei von hydrolysierbaren funktionellen Organosubstituenten (**Sofh**) sind, die imstande sind,in situ bei der Hydrolyse und/oder bei der Vernetzung durch Kondensation flüchtige organische Verbindungen (COV) zu bilden;

. **daß** sie frei ist von COV;

- **daß** sie frei ist von Polyvinylalkohol;
- und **daß** sie gebildet wird durch:

  - A - zumindest ein Polyorganosiloxan (POS), welches je Molekül zumindest zwei OH-Gruppen aufweist;
  - B - zumindest einen wasserlöslichen Haftpromotor, der imstande ist, sich in Wasser bei einer Temperatur von 25°C in einer Menge von zumindest 5 Gew.% zu lösen, und ausgewählt ist unter den Silanen und/oder den hydroxylierten POS, die, je Molekül, zumindest eine Hydroxylgruppe und zumindest eine hydrophile Funktion für die Verankerung an einem Träger (**Fas**) aufweisen sowie unter den Gemischen dieser Produkte unter Ausschluß der Hydrolyseprodukte von alkoxylierten, epoxyfunktionellen Silanen, wobei die Fas-Funktionen, die identisch oder voneinander verschieden sind, ausgewählt sind aus der Gruppe, umfassend die Funktionen: Amino, Epoxy, Acrylo, Methacrylo, Ureido, Mercapto, Thiol, Chloralkyl;
  - C - zumindest einen organometallischen Kondensationskatalysator;
  - D - gegebenenfalls zumindest ein oberflächenaktives Mittel;
  - E - und gegebenenfalls zumindest ein Vernetzungsmittel unter den Bedingungen, wonach

    * 1 * in Anwesenheit eines derartigen Vernetzungsmittels (E) der Promotor (B) lediglich wenigstens eine OH-Gruppe je Molekül aufweisen kann,
    * 2 * während in Abwesenheit eines derartigen Vemetzungsmittels (E) der Promotor (B) und/oder das POS (A) zumindest drei OH-Gruppen aufweist.

**2.** Dispersion gemäß Anspruch 1, **dadurch gekennzeichnet, daß** sie obligatorisch außer den Bestandteilen (A), (B) und (C) zumindest ein oberflächenaktives Mittel (D) und zumindest ein Vernetzungsmittel (E) umfaßt.

**3.** Dispersion gemäß einem der Ansprüche 1 oder 2, **dadurch gekennzeichnet, daß** das POS (A) ein Öl der Formel

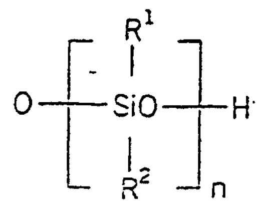

ist, wobei n ≥ 10, $R^1$, $R^2$ identisch oder verschieden, einer Hydroxylgruppe, einem $C_{1-6}$-(Cyclo)Alkyl oder einem $C_{1-6}$-(Cyclo) Alkenyl oder auch einem Amin entsprechen.

**4.** Dispersion gemäß einem der Ansprüche 1 bis 3, **dadurch gekennzeichnet,**

- **daß** der wasserlösliche Haftpromotor (B) ein lineares, hydroxyliertes Polydiorganosiloxan mit Siloxygruppierungen D und/oder MD und/oder ein hydroxyliertes POS-Harz mit Siloxygruppierungen T und gegebenenfalls M und/oder D und/oder Q oder auch Siloxygruppierungen Q und M und/oder D und/oder T ist,
- **daß** der Promotor frei von COV und nicht durch Sofh substituiert ist,
- **daß** der Promotor zumindest eine Fas, die an zumindest ein Si gebunden ist, enthält.

**5.** Dispersion gemäß Anspruch 4 ,**dadurch gekennzeichnet, daß** der Promotor (B) ein Harz ist, ausgewählt unter denjenigen des Typs T(OH), DT(OH), DQ(OH), DT(OH), MQ(OH), MDT(OH), MDQ(OH) oder den Gemischen hiervon.

**6.** Dispersion gemäß einem der Ansprüche 1 bis 5, **dadurch gekennzeichnet, daß** der Haftpromotor (B) die Rolle des Vernetzungsmittels allein oder in Ergänzung zu einem Vernetzungsmittel (E) ausübt, gebildet:

- durch zumindest ein hydroxyliertes Harz, das, je Molekül, zumindest zwei verschiedene Siloxygruppierungen, ausgewählt unter denjenigen des Typs M,D,T und Q, aufweist; wobei zumindest eine eine Gruppierung T oder eine Gruppierung Q ist;
- und/oder aus zumindest einem der folgenden Produkte: Silikonate, Silikate, Siliciumdioxide (pulverförmig oder kolloidal).

7. Dispersion gemäß einem der Ansprüche 1 bis 6, **dadurch gekennzeichnet, daß** sie außerdem umfaßt:

   - einen siliciumdioxidhaltigen oder nicht-siliciumdioxidhaltigen Füllstoff (F), ausgewähit unter den folgenden Produkten: Fällungs- oder Nicht-Fällungs- Siliciumdioxid, kolloidales Silicium-dioxid oder Siliciumdioxid in Pulverform, Carbonate und deren Gemische,

   * gegebenenfalls ein oder mehrere Dispergiermittel (G),
   * gegebenenfalls einen oder mehrere Weichmacher (H),
   * gegebenenfalls ein oder mehrere Antifungusmittel (I),
   * gegebenenfalls ein oder mehrere Antischaummittel (J),
   * gegebenenfalls einen oder mehrere Stabilisatoren oder Verdickungsmittel (K),
   * gegebenenfalls eine oder mehrere Basen (L).

8. Mastix, Abdichtungsmaterial, Film, Anstrich oder Überzug (RSE), **dadurch gekennzeichnet, daß** er aus der Dispersion gemäß einem der Ansprüche 1 bis 7 und/oder aus dem vernetzten Elastomeren, das aus dieser Dispersion hervorgeht, besteht.

9. Verwendung des Produkts (B) gemäß einem der Ansprüche 1, 4 und 5 als wasserlöslicher Promotor (B) für die Haftung und die Kohäsion in einer wäßrigen Silikondispersion, die durch Kondensation zu einem adhäsiven Elastomeren vemetzbar ist und gebildet wird durch:

   . -(A)- zumindest ein POS, das, je Molekül, zumindest zwei OH-Gruppen aufweist;
   . -(C)- zumindest einen Kondensationskatalysator;
   . -(D)- gegebenenfalls zumindest ein oberflächenaktives Mittel;
   . -(E)- gegebenenfalls ein Vernetzungsmittel, gebildet aus zumindest einem hydroxylierten Silikonharz, das, je Molekül, wenigstens zwei verschiedene Siloxygruppierungen aufweist, ausgewählt unter denjenigen des Typs M, D, T und Q; wobei zumindest eine dieser zwei Gruppierungen T oder Q ist;
   . -(F)- gegebenenfalls einen siliciumdioxidhaltigen oder nicht-siliciumdioxidhaltigen Füllstoff;
   . -(G)- gegebenenfalls ein oder mehrere Dispergiermittel (G);
   . -(H)- gegebenenfalls einen oder mehrere Weichmacher (H);
   . -(I)- gegebenenfalls ein oder mehrere Antifungusmittel (I);
   . -(J)- gegebenenfalls ein oder mehrere Antischaummittel (J);
   . -(K)- gegebenenfalls einen oder mehrere Stabilisatoren oder Verdickungsmittel (K);
   . -(L)- gegebenenfalls eine oder mehrere Basen (L).

## Claims

1. Aqueous silicone dispersion which can be cross-linked, by condensation, to an adherent elastomer, **characterized:**

   - **in that** it comprises constituents which can be condensed, are hydroxylated and are free of hydrolysable organofunctional substituents (Sofh), and which are capable of generating volatile organic compounds (VOCs) in situ during the hydrolysis and/or during the cross-linking by condensation;
   - **in that** it is free of VOCs;
   - **in that** it is free of polyvinyl alcohol;
   - and **in that** it consists of:

     - **A** - at least one polyorganosiloxane (POS) having, per molecule, at least two OH groups;
     - **B** - at least one water-soluble adherence promoter capable of dissolving in water at a temperature of 25°C in a quantity of at least 5% by weight and chosen from silanes and/or POSs which are hydroxylated and carry, per molecule, at least one hydroxyl group and at least one hydrophilic function for anchoring onto a support (**Fas**), as well as from mixtures of these products, **excluding** the products of hydrolysis of alkoxylated epoxyfunctional silanes, the said **Fas** functions, which are identical to or different from each other, being chosen from the group comprising the functions: amino, epoxy, acrylo, methacrylo, ureido, mercapto, thiol and chloroalkyl;
     - **C** - at least one organometallic condensation catalyst;
     - **D** - optionally at least one surfactant;
     - **E** - and optionally at least one cross-linking agent with the conditions according to which:

- * 1 * in the presence of such a cross-linking agent (E), the promoter (B) may only contain at least one OH group per molecule,
- * 2 * while in the absence of such a cross-linking agent (E), the promoter (B) and/or the POS (A) comprises at least three OH groups.

**2.** Dispersion according to Claim 1, **characterized in that** it necessarily contains, in addition to the constituents (A), (B) and (C), at least one surfactant (D) and at least one cross-linking agent (E).

**3.** Dispersion according to Claim 1 or 2, **characterized in that** the POS (A) is an oil of formula:

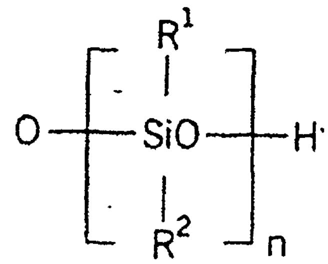

with $n \geq 10$, $R^1$ and $R^2$ identical or different and corresponding to a hydroxyl, a cyclo($C_1$-$C_6$ alkyl) or a cyclo($C_1$-$C_6$ alkenyl) or alternatively an amine.

**4.** Dispersion according to any one of Claims 1 to 3, **characterized**

- **in that** the water-soluble adherence promoter (B) is a linear hydroxylated polydiorganosiloxane with siloxyl units D and/or MD and/or a hydroxylated POS resin comprising siloxyl units T and optionally M and/or D and/or Q or alternatively siloxyl units Q and M and/or D and/or T,
- **in that** this promoter is free of VOC and is not substituted with Sofh groups,
- and **in that** this promoter carries at least one Fas linked to at least one Si.

**5.** Dispersion according to Claim 4, **characterized in that** the promoter (B) is a resin selected from those of the T (OH), DT(OH), DQ(OH), DT(OH), MQ(OH), MDT(OH), MDQ(OH) type or mixtures thereof.

**6.** Dispersion according to any one of Claims 1 to 5, **characterized in that** the adherence promoter (B) plays the role of cross-linking agent alone or in addition to a cross-linking agent (E) consisting:

- of at least one hydroxylated resin having, per molecule, at least two different siloxyl units chosen from those of the M, D, T and Q type; at least one being a T or a Q;
- and/or of at least one of the following products:

siliconates, silicates, silicas (powdered or colloidal).

**7.** Dispersion according to any one of Claims 1 to 6, **characterized in that** it further comprises:

- ♦ a siliceous or nonsiliceous filler (F), selected from the following products: precipitated or nonprecipitated silica, . colloidal or powdered silica, carbonates and mixtures thereof,
- ♦ optionally one or more dispersants (G)
- ♦ optionally one or more plasticizers (H)
- ♦ optionally one or more antifungals (I)
- ♦ optionally one or more antifoams (J)
- ♦ optionally one or more stabilizers or thickeners (K)
- ♦ optionally one or more bases (L).

**8.** Putty, sealing material, film, paint or coating (STC), **characterized in that** it comprises a dispersion according to any one of claims 1 to 7 and/or the cross-linked elastomer derived from this dispersion.

**9.** Use of the product (B) as defined in any one of Claims 1, 4 and 5, as water-soluble cohesion and adherence promoter (B), in an aqueous silicone dispersion which can be cross-linked to an adherent elastomer by condensation and consisting of:

- -(A)- at least one POS having, per molecule, at least two OH groups;
- -(C) at least one condensation catalyst;
- -(D)- optionally at least one surfactant;
- -(E)- optionally one cross-linking agent consisting of at least one hydroxylated silicone resin having, per molecule, at least two different siloxyl units chosen from those of the M, D, T and Q type; at least one of these 2 units being T or Q;
- -(F)- optionally one siliceous or nonsiliceous filler;
- -(G)- optionally one or more dispersants (G);
- -(H)- optionally one or more plasticizers (H);
- -(I)- optionally one or more antifungals (I);
- -(J)- optionally one or more antifoams (J);
- -(K)- optionally one or more stabilizers or thickeners (K);
- -(L)- optionally one or more bases (L).